# EUROPÄISCHE PATENTSCHRIFT

(11) **EP 0 695 581 B1**
(45) Veröffentlichungstag und Bekanntmachung des Hinweises auf die Patenterteilung: **06.08.1997**
(21) Anmeldenummer: 95109990.2
(22) Anmeldetag: 24.06.1995
(51) Int. Cl.: B02C 18/30, A47J 43/07

(54) **Fleischwolf**
Meat mincing machine
Hachoir à viande

(30) Priorität: 04.08.1994 DE 4427613
(43) Veröffentlichungstag der Anmeldung: 07.02.1996
(73) Patentinhaber: Braun Aktiengesellschaft, Frankfurt am Main (DE)
(72) Erfinder: Ring, Martin, Dr., D-65779 Kelkheim (DE); Kamprath, Karl-Heinz, D-65207 Wiesbaden (DE); Poock, Uwe, D-65779 Kelkheim (DE)

(56) Entgegenhaltungen:
- EP-A- 0 127 065
- EP-A- 0 303 956
- EP-A- 0 467 428
- DE-A- 3 638 098
- GB-A- 2 153 206
- US-A- 3 779 565
- US-A- 4 736 896

## Beschreibung

Die Erfindung betrifft einen Fleischwolf mit den Merkmalen des Oberbegriffs des Anspruchs 1.

Ein derartiger Fleischwolf wird als Zusatzgerät einer mit "KM8" bezeichneten Küchenmaschine von der Firma Schneider GmbH & Co. KG, 2000 Wedel/Holstein verkauft. Ebenso sind derartige Fleischwölfe aus der US-A-3,779,565 und GB-A-2 153 206 bekannt. Diese bekannten Fleischwölfe weisen ein rundrohrförmiges Gehäuse auf, dessen eine Endöffnung mit einer Lochscheibe versehen ist. Im Gehäuse ist eine rotierend antreibbare Förderschnecke angeordnet, die vom lochscheibenfernen Ende in das Gehäuse eingebrachtes Fleisch und dgl. in Richtung der Lochscheibe fördert und durch deren Löcher hindurchdrückt. Unmittelbar auf einer gehäuseinneren Seite der Lochscheibe ist ein mit der Förderschnecke mitrotierendes Messer angeordnet, das mehrere sternförmig angeordnete Messerarme mit Schneiden an in Bewegungsrichtung vorderen Kanten aufweist und das in die Löcher der Lochscheibe hineingedrücktes Fleisch von noch im Gehäuse befindlichem Fleisch abschneidet.

Bei den Fleischwölfen nach der US-A-3,779,565 und der "KM8" wird das Messer von einer Feder, die sich an der Förderschnecke abstützt, gegen die Lochscheibe gedrückt. Das Messer hat somit einen Bewegungsfreiraum in Richtung der Rotationsachse und kann beispielsweise durch sehniges, festes Fleisch in axialer Richtung von der Lochscheibe weggedrückt werden. Das Fleisch wird dann nicht mehr - wie vorgesehen - in kurze Stränge zerschnitten. Unter Umständen kann der Fleischwolf verstopfen und muß demontiert und gereinigt werden, bevor er wieder benutzbar ist. Ähnlich ist dies bei dem Fleischwolf nach der GB-A-2 153 206, allerdings fehlt dort eine Feder, so daß aufgrund der beim Zerkleinerungsvorgang auftretenden Axialkräfte das Gehäuse soweit gedehnt wird, daß wiederum ein Axialspiel zwischen dem Messer und der Lochscheibe auftritt, was die Schneidergebnisse nachteilig beeinträchtigt.

Der Erfindung liegt die Aufgabe zugrunde, einen Fleischwolf der eingangs genannten Art so weiterzubilden, daß er auch festes Fleisch und anderes, festes Material problemlos zerkleinert.

Diese Aufgabe wird erfindungsgemäß gelöst durch die Merkmale des Anspruchs 1.

Gemäß des erfindungsgemäßen Zugankers wird das Messer in Anlage an der Lochscheibe gehalten. Ein Abheben des Messers von der Lochscheibe ist nicht möglich, da der Zuganker diese Teile sowie die Förderschnecke fest zusammenhält. Die Erfindung hat den Vorteil, daß sie auch festes Material mit gleichbleibend gutem Ergebnis zerkleinert, das Schneidergebnis ist verbessert.

Durch die Weiterbildung der Merkmale des Patentanspruchs 2 wird eine in sich kraftschlüssig geschlossene Baueinheit erreicht, wobei die Mitnehmerwelle zwischen ihrem Anschlag und der Verspanneinrichting die Förderschnecke, das Messer und die Lochscheibe ortsfest halten. Dabei kann die Verspanneinrichtung so eingestellt werden, daß das Messer spielfrei an der Oberfläche der Lochscheibe anliegt, und dies auch dann, wenn im Betrieb Nahrungsmittel gegen die Lochscheibe gedrückt werden. Die als Zuganker ausgebildete Mitnehmerwelle ist nämlich so fest ausgebildet, daß sie auch bei höheren Zugbelastungen im Betrieb des Fleischwolfs keiner nennenswerten Längenänderung unterzogen ist. Hierdurch werden die Nahrungsmittel besonders exakt geschnitten, was auch den Wirkungsgrad des Fleischwolfs verbessert. Durch die hochfestere Mitnehmerwelle kann die voluminösere Förderschnecke und das Gehäuse aus weniger festem Material hergestellt werden.

Der Antrieb der Förderschnecke erfolgt zusammen mit dem Messer von einer gehäuseäußeren, d. h. der Förderschnecke abgewandten Seite der Lochscheibe her. Zu diesem Zweck ist vorzugsweise die Welle durch die Lochscheibe hindurchgeführt, so daß sie an ihrem durch die Lochscheibe hindurch aus dem Gehäuse hervorstehenden Ende rotierend antreibbar ist, wodurch auch die Förderschnecke und das Messer in Rotation versetzt werden. Auf diese Weise braucht die Welle nicht zum Antrieb an einer Rückseite, d. h. der Lochscheibe abgewandten Seite des Gehäuses herausgeführt werden. In dieser Ausbildung eignet sich der erfindungsgemäße Fleischwolf als Aufsatz auf eine Küchenmaschine, von der er angetrieben wird. Die Rotationsachse der Förderschnecke und des Messers ist in diesem Fall vertikal angeordnet, wodurch kein Winkelgetriebe zwischen der Küchenmaschine und der Welle des Fleischwolfs erforderlich ist, was die Herstellungskosten verringert.

Gemäß den Merkmalen des Patentanspruchs 3 wird die Einheit aus Verspanneinrichtung, Mitnehmerwelle, Förderschnecke, Messer und Lochscheibe auf der einen Seite über die Lochscheibe am Gehäuse und auf der anderen Seite über einen über diese Einheit hinausragenden Zapfen der Mitnehmerwelle abgestützt, die im Gehäuse und gegenüber der Gehäusebohrung zentriert und drehbar gelagert ist. Hierdurch verläuft diese Baueinheit konzentrisch zu der im Gehäuse des Fleischwolfs angeordneten Bohrung, so daß die Förderschnecke nicht an der Innenwandung der Bohrung anschlägt. Die Lagerung dieser Baueinheit muß im Betrieb des Fleischwolfs vorwiegend Radialkräfte, nicht aber Axialkräfte aufnehmen, da diese von der Mitnehmerwelle aufgefangen werden.

Beim Anziehen der Mutter wird das Messer über die Förderschnecke gegen die Lochscheibe gedrückt. Der drehfeste Formschluß zwischen der Mitnehmerwelle und der Förderschnecke sowie dem Messer zur drehfesten Verbindung dieser Teile miteinander hat den Vorteil, daß auf die Mutter von diesen Teilen kein Drehmoment bei Rotation ausgeübt wird, so daß je nach Schraubrichtung des Gewindes und je nach Drehrichtung von Förderschnecke und Messer ein Lösen oder ein Festziehen der Mutter verhindert wird.

Eine besonders einfache drehfeste Verbindung von Förderschnecke und Messer wird durch die Merkmale des Patentanspruchs 5 erreicht.

Nach den Merkmalen des Patentanspruchs 6 ergibt sich eine besonders einfache Lagerung der Mitnehmerwelle auf der einen Seite über die Lochscheibe zum Gehäuse und auf der anderen Seite über einen Lagerzapfen zum Gehäuse.

Durch die Merkmale des Patentanspruchs 7 ergibt sich eine senkrechte Anordnung des Fleischwolfes, so daß die Längsachse des Einfüllschachtes und die Längsachse der Bohrung des Gehäuses, in dem die Förderschnecke, das Messer und die Lochscheibe sowie die Mitnehmerwelle aufgenommen sind, parallel zueinander verlaufen und im Ausführungsbeispiel sich senkrecht zur Abstellfläche erstrecken. Dies vereinfacht die Herstellung des vorzugsweise aus Aluminium gegossenen Gehäuses.

Durch die Merkmale des Patentanspruchs 8 wird eine besonders kompakte Bauweise des Fleischwolfs erreicht, indem die Lochscheibe auf derjenigen Seite liegt, wo sich auch die Antriebsseite der Mitnehmerwelle befindet.

Bei einer vorteilhaften Ausgestaltung der Erfindung ist die Welle drehbar an der Lochscheibe gelagert, sie stützt sich in axialer Richtung über diese Lagerung an der Lochscheibe ab. Dadurch braucht die Förderschnecke, die durch das Fördern von der Lochscheibe weggedrückt wird, nicht an ihrem rückwärtigen Ende in axialer Richtung vom Gehäuse abgestützt werden, eine axiale Lagerung im Gehäuse ist somit nicht erforderlich. Ist die radiale Lagerung der Schnecke in der Lochscheibe ausreichend groß, so kann auch diese am rückwärtigen Gehäuse oder an sonst einem rückwärtigen Abschnitt des Gehäuses entfallen. Auf diese Weise werden keine Kräfte über das Gehäuse übertragen, insbesondere wird das Gehäuse nicht mit den relativ hohen Kräfen in axialer Richtung belastet, die beim Fördern und beim Durchdrücken von Fleisch durch die Löcher der Lochscheibe wirken. Diese Kräfte werden auf direktem Weg von der Welle über die Mutter oder ein sonstiges Halteelement auf die Förderschnecke übertragen. Es ergibt sich eine geschlossene Kraftübertragung von der Lochscheibe über die Welle und die Mutter auf die Förderschnecke auf kurzem Weg. Weiterer Vorteil dieser Ausgestaltung ist, daß durch die Lagerung der aus Welle, Förderschnecke und Messer bestehenden Einheit unmittelbar in der Lochscheibe mit herkömmlichen Fertigungstoleranzen eine genaue Positionierung des Messers zu der Lochscheibe möglich ist, was für ein gutes Schneidergebnis unerlässlich ist.

Bei einer Weiterbildung der Erfindung (Anspruch 9) weist das Gehäuse einen Einfüllschacht an seiner rückwärtigen, der Lochscheibe abgewandten Seite auf, der versetzt zur Rotationsachse der Förderschnecke und des Messers angeordnet ist, so daß eingefülltes Fleisch nicht auf das Stirnende der Förderschnecke, sondern in deren Windungen gelangt, von denen es erfaßt und im Gehäuse zur Lochscheibe gefördert wird.

Zur Verwendung des erfindungsgemäßen Fleischwolfs an einer an sich bekannten Küchenmaschine weist nach Anspruch 10 das Gehäuse des Fleischwolfs einen Deckel an seiner Auslasseite, an der sich die Lochscheibe befindet, für einen, meist schüsselförmigen Arbeitsbehälter der Küchenmaschine auf. Es ist aber auch nach der Erfindung denkbar, den Deckel am hinteren, der Lochscheibe entgegengesetzten Ende am Gehäuse oder sonstwo am Gehäuse anzubringen. Dies kann beispielsweise durch Anspritzen, Anformen oder Anschrauben erfolgen. Angetrieben wird der Fleischwolf in diesem Fall von der Küchenmaschine, die eine vertikale Antriebswelle aufweist, welche im Zentrum des Arbeitsbehälters nach oben ragt. Das zerkleinerte Material gelangt aus dem Fleischwolf in den Arbeitsbehälter. Das Anbringen des Fleischwolfs an der Küchenmaschine ist durch die Ausbildung des Gehäuses mit einem Deckel einfach. Das Gehäuse des Fleischwolfs kann einstückig mit dem Deckel sein, es kann auch fest oder lösbar mit ihm verbunden sein.

Da die Antriebsdrehzahl einer derartigen Küchenmaschine normalerweise relativ hoch ist, ist nach Anspruch 11 ein Untersetzungsgetriebe vorgesehen, das zwischen der Antriebswelle der Küchenmaschine und der Welle des Fleischwolfs angeordnet wird. Dieses Getriebe setzt die Drehzahl der Küchenmaschine auf eine für den Fleischwolf geeignete Drehzahl herab und vergrößert dabei das Antriebsdrehmoment für den Fleischwolf, der zum Zerkleinern von Material ein relativ großes Antriebsdrehmoment benötigt.

In bevorzugter Ausgestaltung der Erfindung nach Anspruch 12 ist der Deckel des Fleischwolfs so ausgebildet, daß er in ein an sich bekanntes Sicherheitssystem der Küchenmaschine integrierbar ist: Er weist dazu an seinem Umfang einen Stift, einen Zapfen oder auch eine Vertiefung auf, an dem bzw. in die eine Nase der Küchenmaschine eingreift, wenn die Küchenmaschine eingeschaltet wird und dadurch ein Verdrehen zum Abnehmen des Deckels oder ein direktes Abnehmen des Deckels verhindert. Sofern die Nase nicht in Eingriff mit dem Stift, dem Zapfen oder der Vertiefung des Deckels gelangt, läßt sich die Küchenmaschine ebenfalls nicht einschalten, so daß sie nur bei ordnungsgemäß aufgesetztem Deckel betrieben werden kann.

Des weiteren sieht die Erfindung nach Anspruch 13 vor, einen sog. KUBBE-Einsatz unterhalb eines Gehäuseauslasses des Fleischwolfs anzubringen. Der KUBBE-Einsatz ist im wesentlichen ein zum Gehäuse des Fleischwolfs hin offener Ringkanal, durch den die Antriebsbzw. die Mitnehmerwelle hindurchgeht, mit einem seitlichen Rohrstutzen als Auslaß. Er dient zur Herstellung von Würsten, zur Nudelherstellung oder zur Gebäckformung, wobei je nach Verwendung im Rohrstutzen noch ein sog. KUBBE-formendes Element angebracht sein kann. Dies ist ein kurzer, zigarrenförmiger Körper, der den Auslaß auf einen Ringraum begrenzt. Der KUBBE-Einsatz wird anstelle von Lochscheibe und Messer am Fleischwolf angebracht.

Die Erfindung wird im folgenden anhand der Zeichnung näher erläutert, die eine Ausführungsform der Erfindung darstellt. Es zeigen:
- Fig. 1: einen erfindungsgemäßen Fleischwolf, der an einer Küchenmaschine angebracht ist;
- Fig. 2: den erfindungsgemäßen Fleischwolf aus Figur 1 in einer anderen Ansicht;
- Fig. 3: die Innenteile des Fleischwolfs sowie ein Zwischen-getriebe in Explosionsdarstellung;
- Fig. 4: einen Achsschnitt durch den erfindungsgemäßen Fleischwolf;
- Fig. 5: einen Achsschnitt durch den erfindungsgemäßen Fleischwolf, an dem ein KUBBE-Einsatz anstelle einer Lochscheibe angebracht ist; und
- Fig. 6: eine Ansicht auf den KUBBE-Einsatz aus Figur 5.

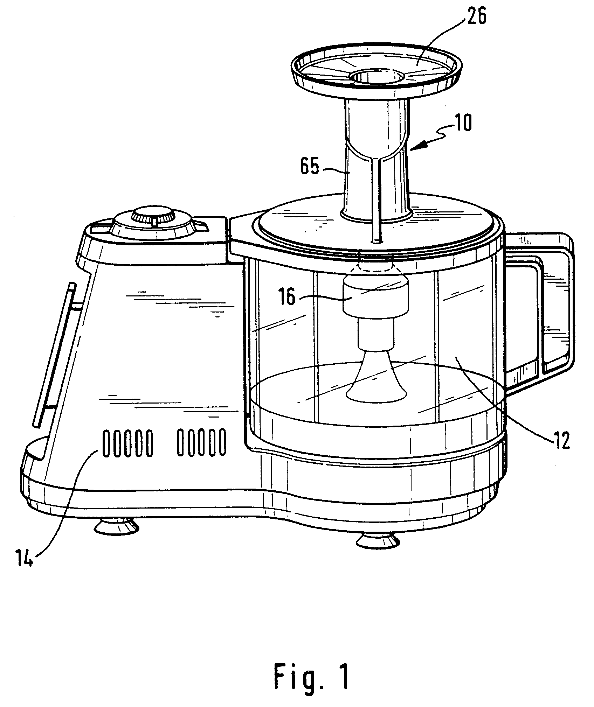

Der in Figur 1 dargestellte, erfindungsgemäße Fleischwolf 10 ist auf einer Schüssel als Arbeitsbehälter 12 einer an sich bekannten Haushaltsmaschine 14 angebracht. Der Fleischwolf 10 wird über ein Zwischengetriebe 16 von der Haushaltsmaschine 14 angetrieben, die eine, in Figur 1 nicht sichtbare, Antriebswelle aufweist, welche von unten in den Arbeitsbehälter 12 ragt. Das Zwischengetriebe 16 ist auf die Antriebswelle aufgesteckt, seine Eingangswelle ist mittels Formschluß drehfest mit der Antriebswelle der Haushaltsmaschine 14 verbunden.

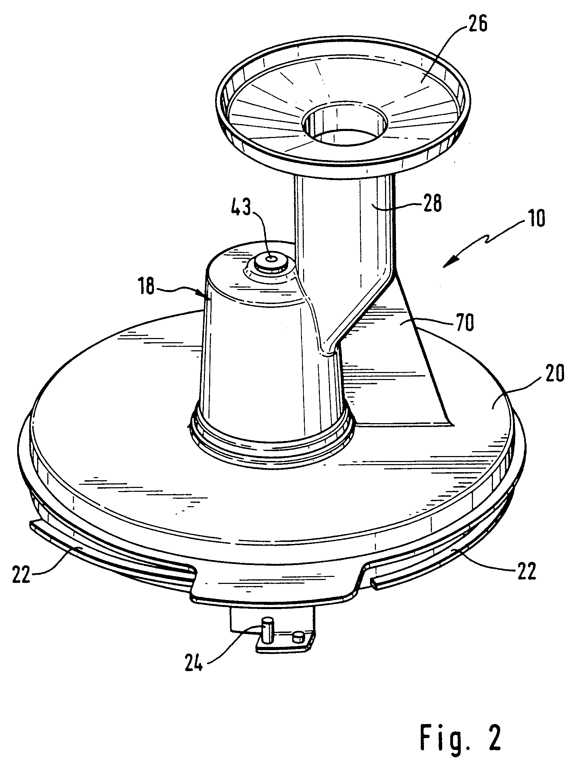

Figur 2 zeigt eine perspektivische Ansicht des erfindungsgemäßen Fleischwolfs 10. Dieser weist ein Gehäuse 18 auf, das einstückig in einen Deckel 20 übergeht, welcher mittels eines Gewindes 22 oder einer Verrastung bajonetähnlich oder sonstwie an seinem Außenumfang auf dem Arbeitsbehälter 12 anschraubbar, einrastbar oder sonstwie befestigbar ist.

An einer Stelle seines Umfangs weist der Deckel 20 einen Verriegelungszapfen 24 auf, der Teil eines an sich bekannten Sicherheitssystems der Haushaltsmaschine 14 ist: Beim Betrieb der Haushaltsmaschine 14 gelangt eine nicht dargestellte Verriegelungsnase der Haushaltsmaschine radial von außen mit dem Verriegelungszapfen 24 so in Eingriff, daß sich der Deckel 20 nicht vom Arbeitsbehälter 12 lösen und abnehmen läßt. Befindet sich der Verriegelungszapfen 24 nicht an der vorgesehenen Stelle, dies ist der Fall, wenn der Deckel 20 nicht richtig auf den Arbeitsbehälter 12 befestigt oder der Arbeitsbehälter 12 nicht ordnungsgemäß an der Haushaltsmaschine 14 angebracht ist, so läßt sich die Haushaltsmaschine 14 nicht einschalten.

An seiner Oberseite hat das Gehäuse 18 einen Einfülltrichter 26, der in einen Einfüllschacht 28 mündet.

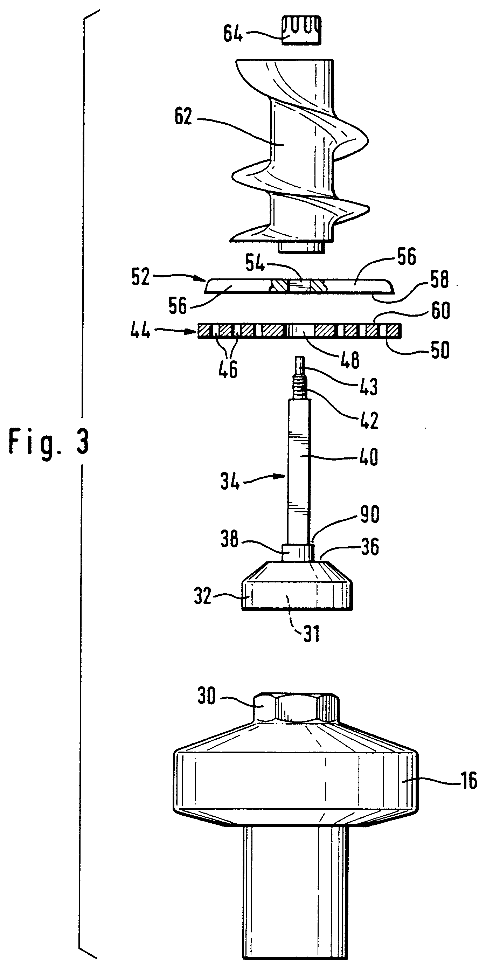

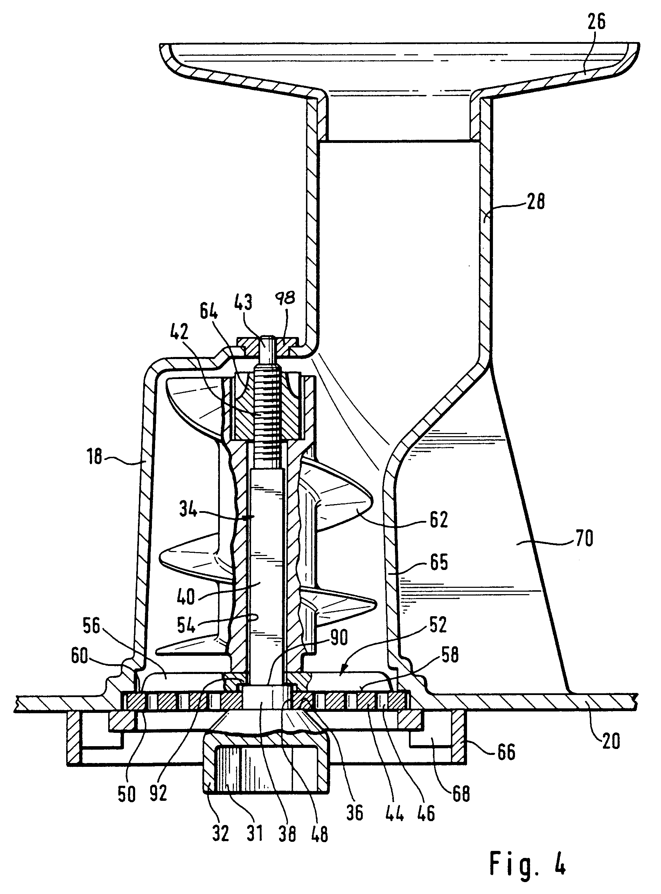

Figur 3 zeigt die Innenteile des erfindungsgemäßen Fleischwolfs 10 sowie das Zwischengetriebe 16 in Explosionsdarstellung. Das Zwischengetriebe 16 ist ein Untersetzungsgetriebe, das die Drehzahl der Antriebswelle der Haushaltsmaschine 14 heruntersetzt und das Antriebsdrehmoment erhöht. Eine Ausgangswelle des Zwischengetriebes 16 weist einen Sechskantkopf 30 zum formschlüssigen Eingriff in einem Innensechskant 31 (Fig. 4) auf, der in einem kappenförmigen Fußteil 32 einer als Zuganker dienenden Mitnehmerwelle 34 des Fleischwolfs 10 angebracht ist.

An seiner Oberseite weist das Fußteil 32 nach den Figuren 3 und 4 eine ringförmige, ebene Axiallagerfläche 36 auf, die sich in einer Radialebene der Mitnehmerwelle 34 befindet. Nach oben hin setzt sich das Fußteil 32 einstückig in einen Radiallagerzapfen 38 und weiter in einen Vierkantschaft 40 fort, der seinerseits in einen Gewindezapfen 42 und zum Schluß in einen zweiten Radiallagerzapfen 43 übergeht. Eine Lochscheibe 44 mit einer Vielzahl über ihre Fläche verteilt angeordneter Durchgangslöcher 46 weist in ihrer Mitte eine Radiallagerbohrung 48 auf. Die Radiallagerbohrung 48 bildet zusammen mit dem Radiallagerzapfen 38 ein Radiallager für die Mitnehmerwelle 34. In axialer Richtung stützt sich die Mitnehmerwelle 34 in zusammengebautem Zustand (Figur 4) mit ihrer Axiallagerfläche 36 gegen eine Unterseite 50 der Lochscheibe 44 ab. Die Durchgangslöcher 46 sind zum Durchpressen von Fleisch oder sonstigem Material vorgesehen, um dieses zu zerkleinern.

Oberhalb der Lochscheibe 44 ist nach den Figuren 3 und 4 ein Messer 52 vorgesehen, das einen Innenvierkant 54 zum Aufstecken auf den Vierkantschaft 40 der Mitnehmerwelle 34 aufweist. Das Messer 52 hat vier sternförmig angeordnete Schneidarme 56 mit jeweils einer unteren, in Bewegungsrichtung vorderen Kante, die als Schneide 58 ausgebildet ist. Das Messer 52 sitzt bei montiertem Fleischwolf 10 auf der sehr eben, vorzugsweise geschliffenen Oberfläche 60 der Lochscheibe 44 auf. Die einer Ringschulter 90 des Radiallagerzapfens 38 der Mitnehmerwelle 34 dient als Absatz zur einfacheren Herstellung des Vierkantschaftes 40. Die Höhe des Radiallagerzapfens 38 ist so bemessen, daß immer ein axiales Spiel zwischen der Ringschulter 90 und dem Ringbund 92 am Messer 52 verbleibt, damit das Messer 52 immer mit geringem Anlagedruck unmittelbar an der Oberfläche 60 der Lochscheibe 44 anliegt.

Oberhalb des Messers 52 ist nach den Figuren 3 und 4 eine Förderschnecke 62 angeordnet, die einen vorzugsweise axial durchgehenden Innenvierkant (Fig. 4) zum formschlüssigen Aufstecken auf die Mitnehmerwelle 34 aufweist. Zum Sichern bzw. zum Einstellen des Axialspieles der Lochscheibe 44, des Messers 52 und der Förderschnecke 62 auf der Mitnehmerwelle 34 dient eine Kronenmutter 64, die auf den Gewindezapfen 42 der Mitnehmerwelle 34 aufschraubbar ist und die leicht von Hand problemlos so weit festgezogen werden kann, daß diese Teile spielfrei aneinander anliegen. Mit der Kronenmutter 64 wird über die Förderschnecke 62 das Messer 52 an der Oberfläche 60 der Lochscheibe 44 spielfrei auf Anlage gehalten. Die Kronenmutter 64, die mit dem Gewinde 42 die Verspanneinrichtung dieser Baueinheit bildet, muß die oftmals erheblichen Axialkräfte beim Fördern und beim Druchpressen von Fleisch durch die Lochscheibe 44 auf der einen Seite auffangen, während dies auf der anderen Seite über die Lochscheibe 44 erfolgt. Hierdurch werden die im Betrieb auftretenden hohen Axialkräfte auf kürzestem Weg aufgefangen und nicht über sonstige Teile, wie beispielsweise das Gehäuse 18, übertragen. Es stützen sich die drehenden Teile, nämlich die Mitnehmerwelle 34, das Messer 52 und die Förderschnecke 62 aufgrund ihres Eigengewichtes über die Axiallagerfläche 36 an der Lochscheibe 44 ab.

Das Gehäuse 18 umfaßt nach Fig. 4 die Förderschnecke 62 mit einem rundrohrförmigen Abschnitt 65. Die Mitnehmerwelle 34 ist mit dem zweiten Radiallagerzapfen 43 an ihrem der Lochscheibe 44 abgewandten Ende im Gehäuse 18 des Fleischwolfs 10 in radialer Richtung geführt. Diese zweite Radiallagerung ist nicht unbedingt erforderlich, sie kann im Einzelfall weggelassen werden.

Die Lochscheibe 44 mit der in ihr gelagerten Mitnehmerwelle 34, dem Messer 52 und der Förderschnecke 62 ist nach Fig. 4 an ihrem Umfang mittels eines Bajonettrings 66 an der Unterseite des Gehäuses 18 in Höhe des Deckels 20 ortsfest gehalten. Der Bajonettring 66 befindet sich mit Nasen 68 an der Unterseite des Deckels 20 in Eingriff, die mit dem Deckel und folglich mit dem Gehäuse 18 einstückig sind. Der Bajonettring 66 wird von unten an den Deckel 20 angesetzt und durch eine kurze Drehbewegung mit diesem verbunden, er stützt die Lochscheibe von unten ab und hält sie dadurch fest im Gehäuse 18.

Der bereits zu Figur 2 genannte Einfüllschacht 28 mit dem Einfülltrichter 26 verläuft achsparallel zur Mitnehmerwelle 34 von oben nach unten, er ist radial versetzt und mündet seitlich an einem oberen Ende der Förderschnecke 62. Durch diese exzentrische Anordnung des Einfüllschachts 28 gelangt eingefülltes Fleisch von der Seite in die Gewindegänge der Förderschnecke 62, wodurch die Förderschnecke 62 das Fleisch gut erfassen kann. Die Mitnehmerwelle mit der Förderschnecke 62 ist vertikal angeordnet, der Fleischwolf 10 also ein Vertikalfleischwolf. Die Förderschnecke 62 fördert das Fleisch oder dgl. nach unten und drückt es durch die Durchgangslöcher 46 der Lochscheibe 44, wobei das Messer 52 das in die Durchgangslöcher 46 gedrückte Fleisch in kurze Stücke schneidet.

Mittels einer mit dem Gehäuse 18 und dem Deckel 20 einstückigen Rippe 70 ist der exzentrisch angeordnete Einfüllschacht 28 am Deckel 20 abgestützt. Der Einfüllschacht 28 mit dem Einfülltrichter 26 befindet sich oberhalb des Deckels 20 und damit von oben gesehen innerhalb einer Grundfläche des Arbeitsbehälters 12, so daß beim Hineindrücken von Fleisch in den Einfüllschacht 28 keine Kippgefahr des Fleischwolfs 12 oder des Arbeitsbehälters 10 besteht.

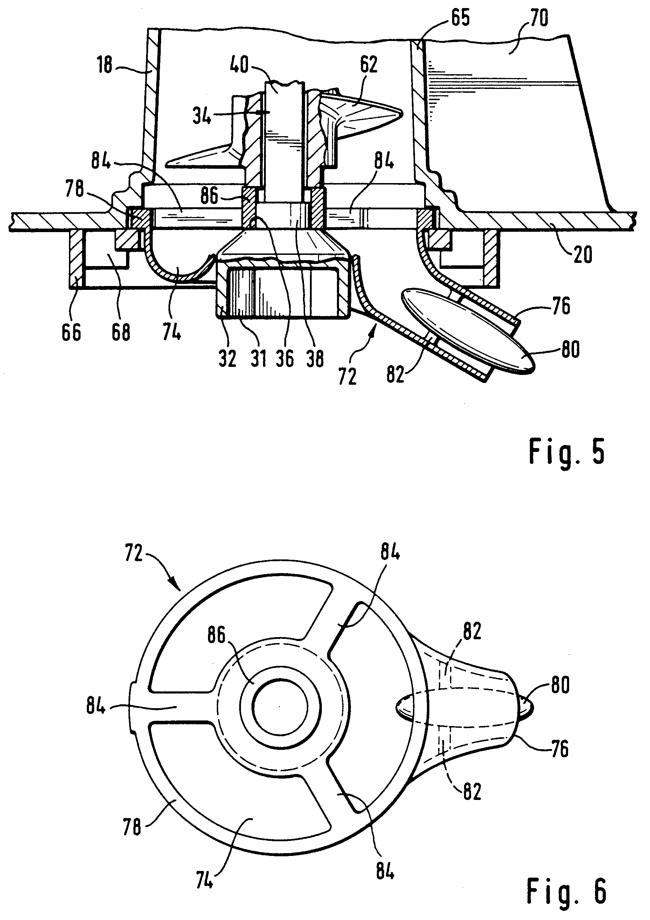

Figur 5 zeigt einen Figur 4 entsprechenden Axialschnitt des Fleischwolfs 10, an dem ein sog. KUBBE-Einsatz 72 anstelle der Lochscheibe 44 angebracht ist. Der obere Bereich des Fleischwolfs 10 ist in Figur 5 abgebrochen. Figur 6 zeigt die Draufsicht auf den KUBBE-Einsatz 72. Der KUBBE-Einsatz ist ein ringförmiger, um das Fußteil 32 der Mitnehmerwelle 34 herum angeordneter, nach oben zur Förderschnecke 62 hin offener Ringkanal 74 mit einem seitlichen, als Rohrstutzen ausgebildeten Ausgang 76. Der KUBBE-Einsatz 72 weist einen nach Außen stehenden Ringflansch 78 auf, über den er mit dem Bajonettring 66 am Gehäuse 18 des Fleischwolfs 10 befestigt ist.

Der KUBBE-Einsatz 72 dient zur Wurst- oder Nudelherstellung oder zur Formung von Gebäck. Mittels der Förderschnecke 62 wird eine zu verarbeitende Masse in den Ringkanal 74 des KUBBE-Einsatzes 72 und aus diesem durch den Ausgang 76 herausgepreßt, wodurch die Masse zu einer Wurst geformt wird. Soll die zu verarbeitende Masse zu einem Schlauch geformt werden, wird im rohrförmigen Ausgang 76 des KUBBE-Einsatzes 72 ein stromlinienförmiges, sog. KUBBE-formendes Element 80 angebracht, das den Ausgang 76 auf einen Ringspalt begrenzt. Das KUBBE-formende Element 80 ist mit sternförmig angeordneten Rippen 82 im Ausgang 76 befestigt.

Zur Lagerung der Mitnehmerwelle 34 mit der Förderschnecke 62 weist der KUBBE-Einsatz 72 drei sternförmig im Ringflansch 78 angeordnete Haltearme 84 auf, die an ihrer Innenseite in eine koaxial angeordnete Lagerbüchse 86 übergehen. Die Lagerbüchse 86 ist in axialer Richtung so lang, wie die Lochscheibe 44 und das Messer 52 zusammen dick sind, die Förderschnecke 62 sitzt dadurch unmittelbar auf der Lagerbüchse 86 auf. Das Messer 52 wird beim Arbeiten mit dem KUBBE-Einsatz 72 nicht benötigt und daher auch nicht eingebaut.

## Patentansprüche

1. Fleischwolf mit einer Förderschnecke (62) und mit einem Messer (52), die drehfest miteinander verbunden und rotierend antreibbar in einem Gehäuse (18) aufgenommen sind, das einen rundrohrförmigen Abschnitt (65) aufweist, der die Förderschnecke (62) umschließt und an dem an dem einen Ende eine Lochscheibe (44) lösbar befestigt ist, an dessen gehäuseinneren Seite (58) das Messer (52) so anliegt, daß seine Schneide/Schneiden (58) bei Rotation des Messers (52) die Lochscheibe (44) überstreichen,
**dadurch gekennzeichnet**,
daß die Förderschnecke (62), das Messer (52) und die Lochscheibe (44) von einem Zuganker (34) zusammengehalten werden, so daß diese Teile spielfrei aneinander anliegen.

2. Fleischwolf nach Anspruch 1,
**dadurch gekennzeichnet**,
daß der Zuganker (34) von einer rotierend antreibbaren Mitnehmerwelle (34) gebildet wird, die die Förderschnecke (62), das Messer (52) und die Lochscheibe (44) durchdringt, daß die Mitnehmerwelle (34) am einen Ende mit einem Anschlag (36) und am anderen Ende mit einer Verspanneinrichtung (42, (64) versehen ist, so daß bei montiertem Fleischwolf und angezogener Verspanneinrichtung (42, 64) diese über die Förderschnecke (62) das Messer (52) auf Anlage an der gehäuseinneren Seite (58) der Lochscheibe (44) hält.

3. Fleischwolf nach Anspruch 2,
**dadurch gekennzeichnet**,
daß die Förderschnecke (62), das Messer (52) und die Lochscheibe (44) auf der Mitnehmerwelle (34) zentriert sind und daß die Mitnehmerwelle (34) am einen Ende über die Lochscheibe (44) am Gehäuse (18) und am anderen Ende direkt am Gehäuse (18) abgestützt sind.

4. Fleischwolf nach Anspruch 3,
**dadurch gekennzeichnet**,
daß die Mitnehmerwelle (34) einen Zapfen (38) aufweist, der in eine an der Lochscheibe (44) ausgebildete Bohrung eingreift und dort drehbar gelagert ist und daß am anderen Ende der Mitnehmerwelle (34) ein Zapfen (43) ausgebildet ist, der in eine am Gehäuse (18) ausgebildete Bohrung (97) einer Lagerbuchse (98) drehbar zentriert und gelagert ist.

5. Fleischwolf nach Anspruch 2,
**dadurch gekennzeichnet**,
daß die drehfeste Verbindung von Förderschnecke (62), Messer (52) und Mitnehmerwelle (34) durch einen Mehrkantschaft, vorzugsweise durch einen Vierkantschaft (40) erfolgt.

6. Fleischwolf nach Anspruch 1,
**dadurch gekennzeichnet**,
daß die Lochscheibe (44) drehfest im Gehäuse (18) gehalten ist und als Gleitlager für den an der Mitnehmerwelle (34) ausgebildeten Radiallagerzapfen (38) dient.

7. Fleischwolf nach Anspruch 1,
**dadurch gekennzeichnet**,
daß das Gehäuse (18), die Förderschnecke (62), das Messer (52) und die Mitnehmerwelle (34) vertikal angeordnet sind.

8. Fleischwolf nach Anspruch 7,
**dadurch gekennzeichnet**,
daß sich das Messer (52) und die Lochscheibe (44) am unteren, der Kupplung (31) der Mitnehmerwelle (34) benachbarten Stirnende der Förderschnecke (62) befinden.

9. Fleischwolf nach einem der vorhergehenden Ansprüche,
**dadurch gekennzeichnet**,
daß das Gehäuse (18) einen radial zur Rotationsachse von Förderschnecke (62) und Messer (52) versetzten Einfüllschacht (28) aufweist.

10. Fleischwolf nach einem der vorhergehenden Ansprüche,
**dadurch gekennzeichnet**,
daß das Gehäuse (18) im Bereich der Lochscheibe (44) einen Deckel (20) für einen Arbeitsbehälter (12) einer Küchenmaschine (14) aufweist.

11. Fleischwolf nach einem der vorhergehenden Ansprüche,
**dadurch gekennzeichnet**,
daß ein Zwischengetriebe (16) zwischen eine Antriebswelle der Küchenmaschine (14) und die Mitnehmerwelle (34) des Fleischwolfs (10) zwischengeschaltet ist.

12. Fleischwolf nach Anspruch 10,
**dadurch gekennzeichnet**,
daß der Deckel (20) beim Betrieb der Küchenmaschine (14) zum Antrieb des Fleischwolfs (10) auf dem Arbeitsbehälter (12) verriegelt ist, und daß die Küchenmaschine (14) nicht ohne wie vorgesehen aufgesetzten Deckel (20) betrieben werden kann.

13. Fleischwolf nach einem der vorhergehenden Ansprüche,
**dadurch gekennzeichnet**,
daß an dem lochscheibenseitigen Ende des rundrohrförmigen, die Förderschnecke (62) umschließenden, Gehäuseabschnitts (65) ein zur Förderschnecke (62) offener Ringkanal (74) mit einer Seitenmündung (76) anbringbar ist.

## Claims

1. Meat grinder including a conveyer worm (62) and a blade (52) which are non-rotatably coupled to each other and are rotatably drivably accommodated in a casing (18) which has a round, tubular portion (65) enclosing the conveyer worm (62) and having a perforated disc (44) detachably attached to its one end, the blade (52) abutting on the inward casing side of the disc so that its cutting edge(s) (58) brush over the perforated disc (44) upon rotation of the blade (52),
**characterized** in that the conveyer worm (62), the blade (52) and the perforated disc (44) are retained by a tie rod (34) so that these components bear against each other in a clearance-free manner.

2. Meat grinder as claimed in claim 1,
**characterized** in that the tie rod (34) is configured as a rotatingly drivable clutch shaft (34) which extends through the conveyer worm (62), the blade (52) and the perforated disc (44), in that the clutch shaft (34) includes a stop (36) on its one end and a tensioning device (42, 64) on its other end so that, with the meat grinder assembled and the tensioning device (42, 64) tightened, the latter device by way of the conveyer worm (62) retains the blade (52) in abutment on the inward casing side (58) of the perforated disc (44).

3. Meat grinder as claimed in claim 2,
**characterized** in that the conveyer worm (62), the blade (52) and the perforated disc (44) are centered on the clutch shaft (34), and in that the clutch shaft (34) at its one end is supported on the casing (18) by way of the perforated disc (44) and at its other end is supported directly on the casing (18).

4. Meat grinder as claimed in claim 3,
**characterized** in that the clutch shaft (34) has a pin (38) which engages a bore provided in the perforated disc (44) to be rotatably mounted therein, and in that the other end of the clutch shaft (34) has a pin (43) which is rotatably centered and mounted in a bore (97) of a bearing bushing (98) provided in the casing (18).

5. Meat grinder as claimed in claim 2,
**characterized** in that the non-rotatable coupling between the conveyer worm (62), the blade (52) and the clutch shaft (34) is provided by a polygonal shaft, preferably by a square shaft (40).

6. Meat grinder as claimed in claim 1,
**characterized** in that the perforated disc (44) is non-rotatably retained in the casing (18) and is used as a sliding bearing for the radial bearing pin (38) provided on the clutch shaft (34).

7. Meat grinder as claimed in claim 1,
**characterized** in that the casing (18), the conveyer worm (62), the blade (52) and the clutch shaft (34) are vertically arranged.

8. Meat grinder as claimed in claim 7,
**characterized** in that the blade (52) and the perforated disc (44) are positioned on the bottom frontal end of the conveyer worm (62) adjacent to the coupling (31) of the clutch shaft (34).

9. Meat grinder as claimed in any one of the preceding claims,
**characterized** in that the casing (18) has a feed opening (28) which is offset radially in relation to the axis of rotation of the conveyer worm (62) and the blade (52).

10. Meat grinder as claimed in any one of the preceding claims,
**characterized** in that the casing (18), in the area of the perforated disc (44), includes a lid (20) for a receptacle (12) of a kitchen appliance (14).

11. Meat grinder as claimed in any one of the preceding claims,
**characterized** in that an intermediate gear (16) is interposed between a drive shaft of the kitchen appliance (14) and the clutch shaft (34) of the meat grinder (10).

12. Meat grinder as claimed in claim 10,
**characterized** in that the lid (20) is locked on the receptacle (12) for driving the meat grinder (10) during operation of the kitchen appliance (14), and in that the kitchen appliance (14) cannot be operated if the lid (20) is not installed as intended.

13. Meat grinder as claimed in any one of the preceding claims,
**characterized** in that an annular channel (74) with a lateral mouth (76) open towards the conveyer worm (62) can be mounted on the perforated-disc side end of the round, tubular casing portion (65) which encloses the conveyer worm (62).

## Revendications

1. Hachoir à viande comprenant une vis transporteuse (62) et un couteau (52) qui sont reliés solidairement en rotation l'un à l'autre et logés, de façon à pouvoir être entraînés en rotation dans un corps (18) qui présente un segment tubulaire creux (65) qui renferme la vis transporteuse (62) et auquel une plaque perforée (44) est fixée de façon démontable à une extrémité, le couteau (52) étant appuyé contre la face (58) de cette plaque qui est à l'intérieur du corps, de manière que son tranchant ou ses tranchants (58) balayent la plaque perforée (44) lors de la rotation du couteau (52),
caractérisé
en ce que la vis transporteuse (62), le couteau (52) et la plaque perforée (44) sont maintenus assemblés par un tirant (34), de sorte que ces éléments sont appliqués l'un contre l'autre sans jeu.

2. Hachoir à viande selon la revendication 1,
caractérisé
en ce que le tirant (34) est formé par un arbre entraîneur (34) pouvant être entraîné en rotation qui traverse la vis transporteuse (62), le couteau (52) et la plaque perforée (44), en ce que l'arbre entraîneur (34) est muni d'une butée (36) à une extrémité et d'un dispositif de serrage (42, 64) à son autre extrémité, de sorte que, lorsque le hachoir à viande est monté et que le dispositif de serrage (42, 64) est serré, ce dispositif maintient le couteau (52) en appui contre la face (58) de la plaque perforée (44) qui est située à l'intérieur du corps par l'intermédiaire de la vis transporteuse (62).

3. Hachoir à viande selon la revendication 2,
caractérisé
en ce que la vis transporteuse (62), le couteau (52) et la plaque perforée (44) sont centrés sur l'arbre entraîneur (34) et en ce que l'arbre entraîneur (34) prend appui sur le corps (18) par l'intermédiaire de la plaque perforée (44) à une extrémité et prend appui directement sur le corps (18) à l'autre extrémité.

4. Hachoir à viande selon la revendication 3,
caractérisé
en ce que l'arbre entraîneur (34) présente un tourillon (38) qui est engagé dans un perçage formé dans la plaque perforée (44) et, là, est monté rotatif, et en ce qu'à l'autre extrémité de l'arbre entraîneur (34), est formé un tourillon (43) qui est centré et monté rotatif dans un perçage (97) d'un tourillon (98) formé sur le corps (18).

5. Hachoir à viande selon la revendication 2,
caractérisé
en ce que la liaison solidaire en rotation liant la vis transporteuse (62), le couteau (52) et l'arbre entraîneur (34) est assurée par une tige polygonale, de préférence, par une tige carrée (40).

6. Hachoir à viande selon la revendication 1,
caractérisé
en ce que la plaque perforée (44) est maintenue solidairement dans le corps (18) et qu'elle sert de palier lisse pour le tourillon de palier radial (38) formé sur l'arbre entraîneur (34).

7. Hachoir à viande selon la revendication 1,
caractérisé
en ce que le corps (18), la vis transporteuse (62), le couteau (52) et l'arbre entraîneur (34) sont disposés verticalement.

8. Hachoir à viande selon la revendication 7,
caractérisé
en ce que le couteau (52) et la plaque perforée (44) se trouvent à l'extrémité frontale inférieure de la vis transporteuse (62) qui est adjacente à l'accouplement (31) de l'arbre entraîneur (34).

9. Hachoir à viande selon une des revendications précédentes,
caractérisé
en ce que le corps (18) présente un puits de chargement (28) qui est déporté radialement par rapport à l'axe de rotation de la vis transporteuse (62) et du couteau (52).

10. Hachoir à viande selon une des revendications précédentes,
caractérisé
en ce que le corps (18) présente, dans la région de la plaque perforée (44) un couvercle (20) destiné à une cuve de travail (12) d'un appareil culinaire (14).

11. Hachoir à viande selon une des revendications précédentes,
caractérisé
en ce qu'un réducteur (16) est interposé entre un arbre d'entraînement de l'appareil culinaire (14) et l'arbre entraîneur (34) du hachoir à viande (10).

12. Hachoir à viande selon la revendication 10,
caractérisé
en ce que, pendant le fonctionnement de l'appareil culinaire (14) qui sert à entraîner le hachoir à viande (10), le couvercle (20) est verrouillé sur la cuve de travail (12), et en ce que l'appareil culinaire (14) ne peut pas être entraîné sans que le couvercle (20) ne soit mis en place comme prévu.

13. Hachoir à viande selon une des revendications précédentes,
caractérisé
en ce qu'une rigole annulaire (74) qui s'ouvre vers la vis transporteuse (62) et est munie d'un débouché latéral (76), peut être fixée à l'extrémité côté plaque perforée du segment tubulaire creux (65) du corps qui entoure la vis transporteuse (62).
